Europäisches Patentamt

European Patent Office

Office européen des brevets

(11) Numéro de publication: **0 244 286**
**A1**

(12) **DEMANDE DE BREVET EUROPEEN**

(21) Numéro de dépôt: **87400809.7**

(22) Date de dépôt: **09.04.87**

(51) Int. Cl.⁴: **B 29 C 33/04**
**B 30 B 15/06**

(30) Priorité: **28.04.86 FR 8606116**

(43) Date de publication de la demande:
**04.11.87 Bulletin 87/45**

(84) Etats contractants désignés: **BE DE ES GB IT**

(71) Demandeur: **SOCIETE ANONYME DES USINES CHAUSSON**
**35, rue Malakoff**
**F-92601 Asnieres Cedex Hauts-de-Seine (FR)**

(72) Inventeur: **Jegourel, Guy**
**85 rue Pasteur**
**F-95130 Le Plessis-Bouchard (FR)**

(74) Mandataire: **Madeuf, René Louis et al**
**Cabinet Madeuf 3, Avenue Bugeaud**
**F-75116 Paris (FR)**

(54) **Dispositif répartiteur de fluides pour le chauffage respectivement le refroidissement d'outils de mise en forme de matières synthétiques.**

(57) Dispositif répartiteur pour le chauffage respectivement le refroidissement d'outils de presse pour la mise en forme de matières synthétiques, caractérisé en ce que des conduits distributeurs d'entrée et de sortie (10) sont reliés à des canaux d'entrée et de sortie (11, 11a) débouchant dans des saignées latérales (16, 17, 16a, 17a) que présentent des répartiteurs (12, 13) respectivement disposés sur au moins un côté de chaque outil (2, 4).

Fig.2

**Description**

Dispositif répartiteur de fluides pour le chauffage respectivement le refroidissement d'outils de mise en forme de matières synthétiques.

La présente invention concerne les outils chauffants qui sont utilisés pour la mise en forme de matières synthétiques armées ou non et qui, à cette fin, comportent des nappes de canaux dans lesquels circule un fluide caloporteur.

Dans les outils de cette sorte, par exemple des poinçons ou matrices de mise en forme par pression de feuilles contenant une matière synthétique ou des parties d'un moule d'injection, les nappes de canaux sont réparties pour que la température de l'outil suive une loi préétablie. Le plus souvent, cette loi consiste à assurer l'uniformité de la chaleur de l'outil.

Dans les dispositifs utilisés jusqu'à présent, des nappes de canaux sont reliées à des conduits distributeurs d'entrée et de sortie qui débouchent sur certains des côtés de l'outil. Les extrémités des canaux sont taraudées pour recevoir des raccords vissés qui mènent par des conduits à des tubes collecteurs pour le fluide caloporteur devant être amené dans l'outil, puis évacué de cet outil. Cette disposition connue permet de satisfaire à la condition d'un chauffage ou d'un refroidissement de l'outil suivant une loi prédéterminée mais nécessite l'utilisation d'un très grand nombre de raccords et de conduites reliées à ces raccords. Chaque conduite doit évidemment à son tour être ensuite reliée à un tube collecteur, ce qui double le nombre de raccords.

Outre le prix de revient, cette disposition multiplie le risque de fuite particulièrement lorsque le fluide caloporteur circule sous pression. De plus, le montage et le démontage d'un outil nécessitant un temps de main d'oeuvre important.

La présente invention crée un nouveau dispositif répartiteur dans lequel chaque outil n'est relié qu'à deux raccords, un d'entrée, l'autre de sortie. Du fait de l'existence de seulement deux raccords et, par conséquent, de deux conduites entre un tube collecteur d'amenée et un tube collecteur de sortie, il devient, en outre, possible de réduire les pertes calorifiques en rendant possible la mise en place d'éléments isolants, ce qui était évidemment impossible économiquement lorsqu'un grand nombre de raccords et de tubes de dérivation étaient utilisés.

Conformément à l'invention, le dispositif répartiteur pour le chauffage respectivement le refroidissement uniforme d'outils du genre outils de presse et moules pour la mise en forme de matières synthétiques, lesdits outils comportant des nappes de canaux alimentés par des conduits distributeurs d'entrée et de sortie, est caractérisé en ce que les conduits distributeurs d'entrée et de sortie sont reliés à des canaux d'entrée et de sortie débouchant dans des saignées latérales que présentent des répartiteurs rapportés sur au moins un côté de chaque outil.

Diverses autres caractéristiques de l'objet de l'invention ressortent d'ailleurs de la description détaillée qui suit.

Une forme de réalisation de l'objet de l'invention est représentée, à titre d'exemple non limitatif, au dessin annexé.

La fig. 1 est une élévation schématique de deux outils d'une presse chauffante comportant le dispositif répartiteur de l'invention.

La fig. 2 est une coupe-élévation partielle du dispositif répartiteur vue sensiblement suivant la ligne II-II de la fig. 1.

La fig. 3 est un plan correspondant à la fig. 2, le plateau de presse et les organes qui en font partie n'étant pas représentés.

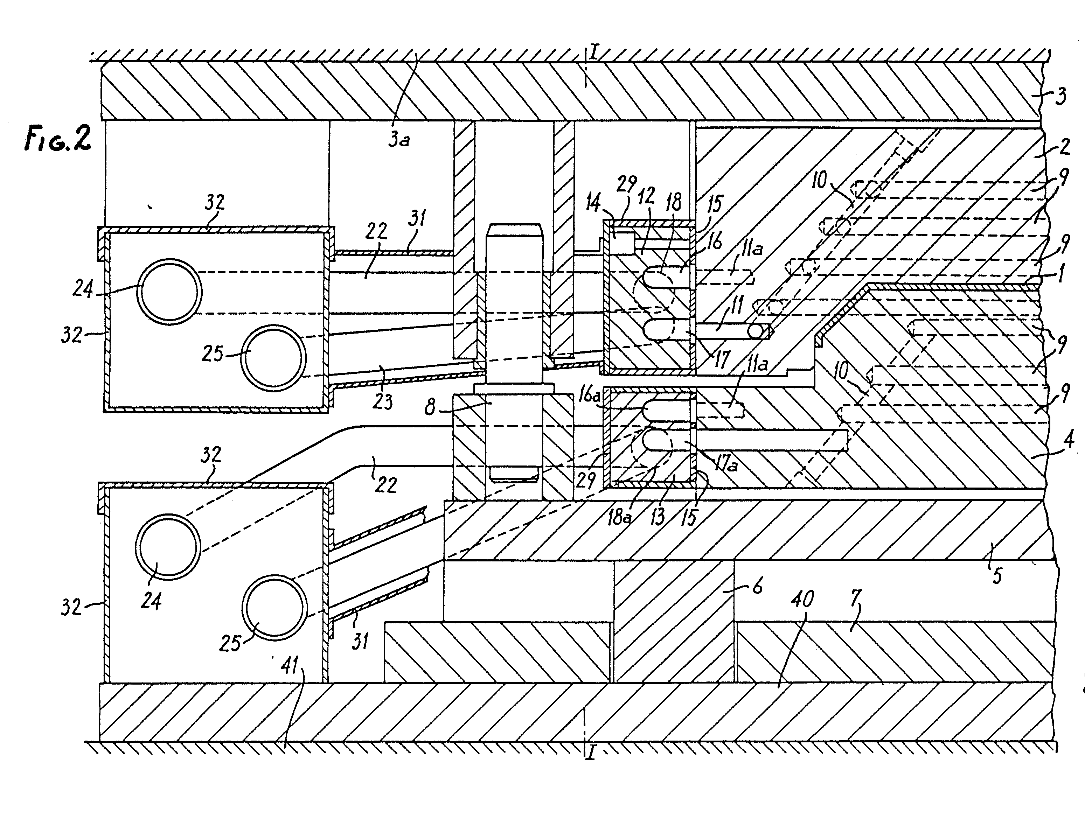

Le dessin montre de façon schématique un moule pour le moulage par compression d'une pièce 1 en matière synthétique. Le moule 1 pourrait être réalisé de manière analogue pour le moulage par injection et il comprendrait le même dispositif répartiteur que celui décrit dans ce qui suit. La matrice 2 du moule est représentée fixée à une semelle 3 suspendue au plateau supérieur de presse 3a et le poinçon 4 fixé sur une semelle intermédiaire 5 reliée à une semelle inférieure 40 par l'intermédiaire d'entretoises 7, le tout étant fixé au plateau inférieur de presse 41 par l'intermédiaire de la semelle 40. Le guidage entre les parties inférieure et supérieure du moule est assuré par des colonnes 8 visibles à la fig. 2.

D'une manière connue, la matrice 2 et le poinçon 4 qui constituent les outils de travail et qui doivent être chauffés et/ou refroidis sont percés de nappes de canaux 9, chaque nappe étant réunie par au moins un conduit distributeur 10 d'entrée et de sortie. Chaque conduit distributeur d'entrée ou de sortie communique avec l'extérieur de l'outil, c'est-à-dire la matrice 1 ou le poinçon 4, par un canal 11, respectivement 11a. Il existe ainsi pour les différentes nappes de canaux 9 plusieurs canaux d'entrée 11 et plusieurs canaux de sortie 11a.

Les mêmes numéros de référence en ce qui concerne les nappes de canaux, les conduits distributeurs d'entrée et de sortie et les canaux d'entrée 11 et de sortie 11a sont utilisés pour les deux outils 2 et 4 puisqu'ils sont analogues.

Selon l'invention, on fait en sorte que des canaux 11, 11a d'entrée et de sortie débouchent sur un même côté des outils 2 et 4 et on fixe, sur ce côté, un répartiteur 12 sur la matrice et un répartiteur 13 sur le poinçon.

La fixation des répartiteurs 12, 13 est assurée au moyen de boulons 14 et par l'intermédiaire d'un joint 15 qui peut par exemple être constitué sous la forme d'une plaque présentant des perforations correspondant aux différents canaux d'entrée et de sortie 11, 11a.

Chaque répartiteur 12, 13 présente des saignées latérales 16, 17, 16a, 17a qui communi-

quent respectivement avec les canaux d'entrée 11 ou de sortie 11a.

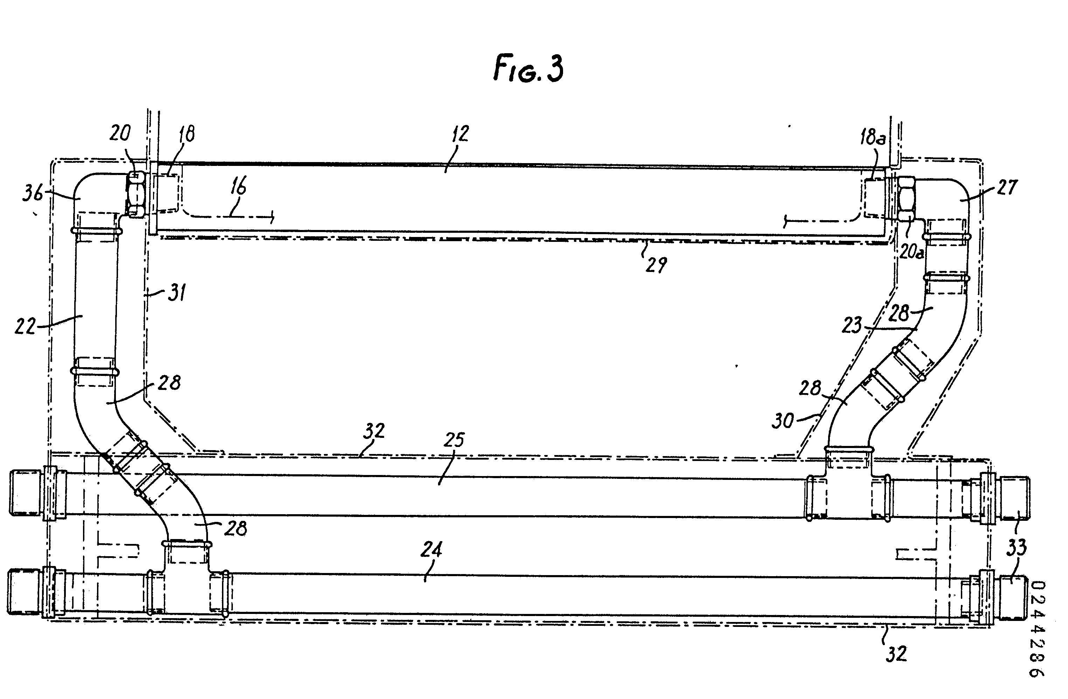

Les saignées 16,17 d'une part, et 16a, 17a, d'autre part, communiquent par des trous taraudés 18, 19, 18a, 19a avec des raccords 20, 21, 20a, 21a. Les raccords ci-dessus, par exemple les raccords 20, 20a bien visibles à la fig. 3, sont reliés par des conduites 22, 23, respectivement à des tubes collecteurs 24, 25. Les conduites 22, 23 comportent des coudes tels que 26, 27 et des durites ou joints tournants tels que 28 pour permettre une déformation éventuelle des conduites 22, 23 lorsqu'elles relient les tubes collecteurs 24, 25 à un outil mobile tel que le poinçon 4.

La disposition décrite ci-dessus fait que les répartiteurs 12, 13 peuvent être entourés par des enveloppes isolantes (29 et il en est de même des conduites 22, 23 et des tubes collecteurs 24, 25 qui sont respectivement contenus dans des enveloppes isolantes 30, 31 et 32.

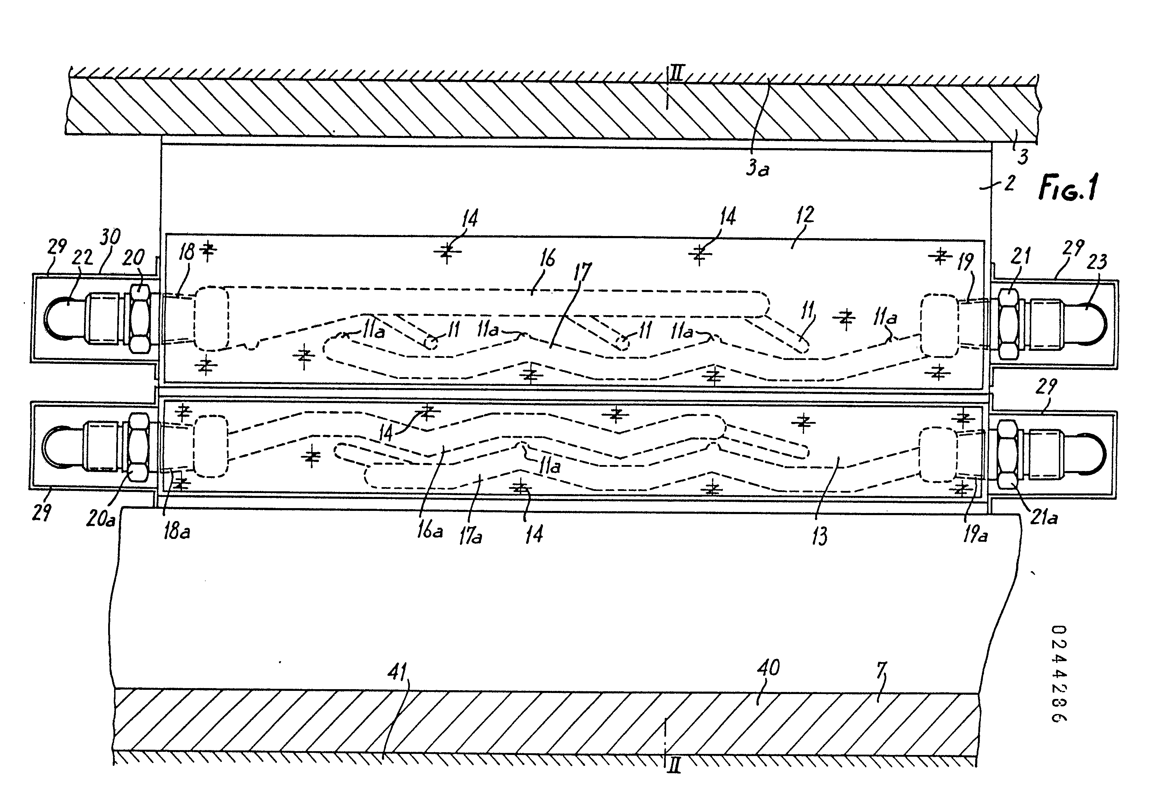

Comme cela ressort de ce qui précède et en particulier de la fig. 1, le canal 11 de chaque nappe de canaux 9 est alimenté à partir d'une même saignée latérale telle que 16 ou 16a. Le fluide chaud circule donc dans les différentes nappes de canaux 9 à la même température et il est ensuite ramené par le canal 11 communiquant avec chaque nappe dans une même saignée 17 ou 17a. Les canaux d'entrée 11 et de sortie 11a étant alternés, cela a pour effet d'homogénéiser la température dans tout l'ensemble de chaque outil.

Etant donné que chaque outil n'est relié qu'à deux répartiteurs disposés sur chacun de deux de ses côtés, il est facile d'isoler thermiquement les répartiteurs de même que leurs embouts et les conduites 22, 23 les reliant aux tubes collecteurs 24, 25 eux-mêmes contenus dans des enveloppes isolantes. Les conduites 22, 23 constituant des conduits de dérivation à partir des tubes collecteurs 24, 25 il s'ensuit que ces derniers peuvent être utilisés pour l'alimentation de plusieurs machines successives en prévoyant que les tubes collecteurs 24, 25 soient munis à leurs extrémités d'embouts de raccordement 33.

Pour faciliter l'entretien, les différentes enveloppes isolantes sont avantageusement réalisées de manière démontable par exemple en leur faisant comporter l'aspect d'une boîte et d'un couvercle comme illustré par la fig. 2 en ce qui concerne les enveloppes 32.

L'invention n'est pas limitée à l'exemple de réalisation représenté et décrit en détail, car diverses modifications peuvent y être apportées sans sortir de son cadre. En particulier, les répartiteurs d'entrée et de sortie 12, 13 peuvent être montés d'un même côté de chaque outil, ce qui rend possible de disposer tous les tubes collecteurs d'un même côté d'une ou de plusieurs machines alignées.

## Revendications

1. Dispositif répartiteur pour le chauffage respectivement le refroidissement uniforme d'outils du genre outils de presse et moule pour la mise en forme de matières synthétiques, lesdits outils comportant des nappes de canaux alimentés par des conduits distributeurs d'entrée et de sortie, caractérisé en ce que les conduits distributeurs d'entrée et de sortie (10) sont reliés à des canaux d'entrée et de sortie (11, 11a) débouchant dans des saignées latérales (16, 17, 16a, 17a) que présentent des répartiteurs (12, 13) respectivement disposés sur au moins un côté de chaque outil (2, 4).

2. Dispositif répartiteur suivant la revendication 1, caractérisé en ce que les saignées (16, 17 respectivement 16a, 17a) de chaque répartiteur (12, 13) sont reliées en dérivation par des conduites (22, 23) à des collecteurs (24, 25).

3. Dispositif répartiteur suivant l'une des revendications 1 et 2, caractérisé en ce que les répartiteurs (12, 13) respectivement fixés à un outil (2, 4) sont reliés à celui-ci au moyen de boulons (14) et par un joint déformable (15).

4. Dispositif répartiteur suivant l'une des revendications 1 à 3, caractérisé en ce que les répartiteurs (12, 13) présentent des trous taraudés d'extrémité (18, 19) dans lesquels sont vissés des raccords (20, 21) assurant la liaison des saignées (16, 17) aux conduites (22, 23) menant aux tubes collecteur (24, 25).

5. Dispositif répartiteur suivant l'une des revendications 1 à 4, caractérisé en ce que les conduites de dérivation (22, 23) comportent des durites ou joints tournants (28).

6. Dispositif répartiteur suivant l'une des revendications 1 à 5, caractérisé en ce que chaque outil comporte un répartiteur d'entrée (12) et un répartiteur de sortie (13).

7. Dispositif répartiteur suivant l'une des revendications 1 à 6, caractérisé en ce que les répartiteurs d'entrée et de sortie (12, 13) sont montés d'un même côté de l'outil.

8. Dispositif répartiteur suivant l'une des revendications 1 à 7, caractérisé par des enveloppes isolantes (29, 32) entourant au moins les répartiteurs (12, 13), les conduites de dérivation (22, 23) et/ou les tubes collecteurs (24, 25).

9. Dispositif répartiteur suivant l'une des revendications 1 à 8, caractérisé en ce que les enveloppes isolantes sont montées de façon amovible.

Fig.1

0244286

Fig.2

Fig. 3

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int. Cl.4) |
|---|---|---|---|
| A | US-A-3 594 867 (H. PFEIFFER) ----- | 1 | B 29 C 33/04 B 30 B 15/06 |

| | DOMAINES TECHNIQUES RECHERCHES (Int. Cl.4) |
|---|---|
| | B 29 C B 30 B |

Le présent rapport de recherche a été établi pour toutes les revendications

| Lieu de la recherche LA HAYE | Date d'achèvement de la recherche 06-07-1987 | Examinateur DECLERCK J.T. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant